(19) Europäisches Patentamt
European Patent Office
Office européen des brevets

(11) Veröffentlichungsnummer: **0 190 615**
**A2**

(12) # EUROPÄISCHE PATENTANMELDUNG

(21) Anmeldenummer: 86100874.6

(22) Anmeldetag: 23.01.86

(51) Int. Cl.[4]: **C 09 B 62/008**

(30) Priorität: 05.02.85 DE 3503746

(43) Veröffentlichungstag der Anmeldung: 13.08.86 Patentblatt 86/33

(84) Benannte Vertragsstaaten: CH DE FR GB LI

(71) Anmelder: BAYER AG
Konzernverwaltung RP Patentabteilung
D-5090 Leverkusen 1 Bayerwerk(DE)

(72) Erfinder: Jäger, Horst, Dr.
Carl-Rumpff-Strasse 37
D-5090 Leverkusen 1(DE)

(72) Erfinder: Kramer, Horst-Dieter, Dr.
Gabriele-Münter-Strasse 6
D-5090 Leverkusen 1(DE)

(54) **Reaktivfarbstoffe.**

(57) Farbstoffe der Formel

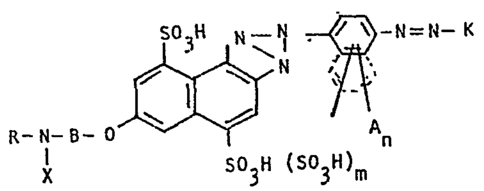

mit den in der Beschreibung genannten Substituentenbedeutungen eignen sich hervorragend zum Färben und bedrucken von natürlichen oder synthetischen Hydroxyl- oder Amidgruppen-haltigen Materialien, wobei sie Färbungen mit guten Echtheiten liefern.



Croydon Printing Company Ltd.

0190615

BAYER AKTIENGESELLSCHAFT 5090 Leverkusen, Bayerwerk
Konzernverwaltung RP
Patentabteilung My/ABc

## Reaktivfarbstoffe

Gegenstand der Erfindung sind Azotriazolylfarbstoffe, die in Form der freien Säure der Formel

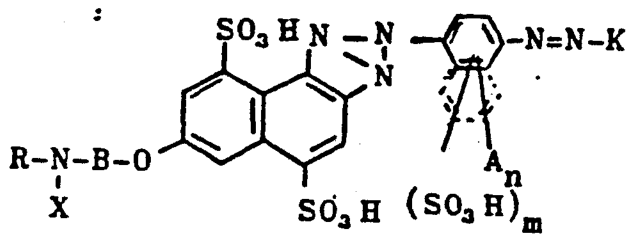

(I)

entsprechen, worin

K = Rest einer Kupplungskomponente, bevorzugt einer Kupplungskomponente der Aminobenzol-, Aminonaphthalin-, Hydroxynaphthalin-, Aminohydroxynaphthalin-, Pyrazolon-, Pyrimidon-, Acetessigsäurearylid-, insbesondere Acetessigsäureanilid- oder Aminopyrazolreihe,

A = Substituent,

B = Brückenglied,

X = Rest einer Reaktivkomponente,

m = 0, 1 oder 2,

n = 0 oder 1,

R = H, gegebenenfalls substituiertes Alkyl.

Beispiele für den Farbstoffen zugrundeliegenden Kupplungskomponenten der Formel

H-K (I)

sind folgende:

a) Pyridone

1-Ethyl-3-carbamoyl-4-methyl-6-hydroxy-pyridon-2,
1-Methyl-3-carbamoyl-4-methyl-6-hydroxy-pyridon-2,
1-Ethyl-3-chlor-4-methyl-6-hydroxy-pyridon-2,
1-Ethyl-3-sulfo-4-methyl-6-hydroxy-pyridon-2,
1-Ethyl-3-sulfomethyl-4-methyl-6-hydroxy-pyridon-2,
1-Ethyl-4-methyl-6-hydroxy-pyridon-2,
4-Carboxy-6-hydroxy-pyridon-2,

b) Pyrazolone und Aminopyrazole

1-(2',3'- oder 4'-Sulfophenyl)-3-methyl-pyrazolon-5,
1-(2'-Chlor-4'- oder 5'-sulfophenyl)-3-methyl-pyrazolon-5,
1-(2'-Methyl-4'-sulfo-phenyl-3-methyl-pyrazolon-5,
1-(2'-Methyl-4'-sulfo-phenyl)-3-carboxy-pyrazolon-5,
1-β-Carboxy-ethyl-3-carboxy-pyrazolon-5.

1-(4',8'-Disulfo-naphthyl-(2))-3-methyl-pyrazolon-5,
1-(5',7'-Disulfo-naphthyl-(2))-3-methyl-pyrazolon-5,
1-(2'-Chlor-5'-sulfo-phenyl)-3-methyl-5-amino-pyrazol,
1-(2'-Chlor-4'-sulfo-phenyl)-3-methyl-5-amino-pyrazol,
1-(3'- oder 4'-sulfo-phenyl)-3-methyl-5-amino-pyrazol,
1-Carboxy-methyl-3-methyl-pyrazolon-5,
1-β-Carboxyethyl-3-methyl-pyrazolon-5,
1-β-Carboxyethyl-3-methyl-5-amino-pyrazol,
1-(4'-Sulfo-phenyl)-3-carboxy-pyrazolon-5.

c) Acetessigsäure

Acetessigsäure-(2-methoxy-4-sulfo-5-methyl)-anilid,
Acetessigsäure-(2-methoxy-4-acetylamino-5-sulfo)-anilid,
Acetessigsäure-(2,5-dimethoxy-4-sulfo)-anilid.

d) Hydroxynaphthaline

1-Hydroxy-naphthalin-4- oder -5-sulfonsäure,
1-Hydroxy-naphthalin-3,5-, -3,6-, -3,7-, -3,8-, -4,6-, -4,7- oder -4,8-disulfonsäure,
1-Hydroxy-naphthalin-3,6,8- oder -4,6,8-trisulfonsäure, 2-Hydroxy-naphthalin-4-, -5-, -6-, -7- oder -8-sulfonsäure,
2-Hydroxy-naphthalin-3,6-, -3,7-, -5,7- oder -6,8-disulfonsäure,

e) Aminohydroxynaphthalin

1-Hydroxy-8-acetylamino-naphthalin-3,6- oder -3,5-disulfonsäure, 1-Hydroxy-8-benzoylamino-naphthalin-3,6- oder -3,5-disulfonsäure, 1-Hydroxy-6-acetylamino-naphthalin-3-sulfonsäure, 1-Hydroxy-7-acetylamino-naphthalin-3-sulfonsäure, 1-Hydroxy-8-acetylamino-naphthalin-5-sulfonsäure, 1-Hydroxy-8-amino-naphthalin-5,7-disulfonsäure, 1-Hydroxy-7-phenylamino-naphthalin-3-sulfonsäure, 1-Hydroxy-7-phenylamino-naphthalin-3,6-disulfonsäure, 1-Hydroxy-8-(2'-fluor-4'-phenylamino-triazinyl-amino-)-naphthalin-3,6-disulfonsäure, 1-Hydroxy-8-(2'-fluor-5',6'-dichlor-pyrimidinyl-amino-)-naphthalin-3,5-disulfonsäure,

f) Pyrimidone

Barbitursäure, Cyaniminobarbitursäure,

g) Aminobenzole und Aminonaphthaline

Anilin, o-Toluidin, o-Anisidin, 2,5-Dimethyl-anilin, 2,5-Dimethoxy-anilin, 2,5-Diethoxy-anilin, 2-Methoxy-5-methyl-anilin, 3-Acetylamino-anilin, 3-Ureidoanilin, m-Toluidin, 3-Amino-naphthalin-6- oder -7-sulfonamid, 1-Amino-2-ethoxy-naphthalin-6-sulfonsäure, 1-Amino-3-acetylamino-benzol-6-sulfonsäure.

Beispiele für Substituenten A sind folgende:

$CH_3$, $C_2H_5$, $CH_3O$, $C_2H_5O$, Cl, F, OH, COOH

Als Brückenglied B kommen beispielsweise folgende Reste in Frage:

$-CH_2-CH_2-$, $-CH_2-CH_2-CH_2-$, 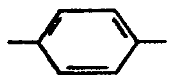 , 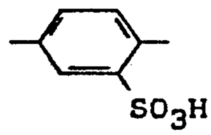

Als Beispiele für Substituenten R seien folgende aufgeführt:

$CH_3$, $C_2H_5$, $C_2H_4OH$.

Für die erfindungsgemäßen Farbstoffe geeignete heterocyclische Reaktivgruppen X, welche mindestens einen abspaltbaren Substituenten an einen heterocyclischen Rest gebunden enthalten, sind unter anderem solche, die mindestens einen reaktiven Substituenten an einen 5- oder 6-gliedrigen heterocyclischen Ring gebunden enthalten, wie an einen Monazin-, Diazin-, Triazin-, z.B. Pyridin-, Pyrimidin-, Pyridazin-, Thiazin-, Oxazin oder asymmetrischen oder symmetrischen Triazinring, oder an ein derartiges Ringsystem, welches einen oder mehrere ankondensierte aromatische Ringe aufweist, wie ein Chinolin-, Phthalazin-, Phenanthridin-Ring-System; die 5- oder 6-gliedrigen heterocyclischen Ringe, welche mindedestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:

Halogen (Cl, Br oder F), Ammonium einschließlich Hydrazinium, Sulfonium, Sulfonyl, Azido-($N_3$), Rhodanido, Thio, Thiolether, Oxiether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkyl-amino-4-chlortriazinyl-6-, wie 2-Methylamino-4-chlortriazinyl-6-, 2-Ethylamino- oder 3-Propylamino-4-chlortriazinyl-6-, 2-β-Oxethylamino-4-chlortriazinyl-6-, 2-Di-β-oxethylamino-6- und die entsprechenden Schwefelsäurehalbester, 2-Diethylamino-4-chlortriazinyl-6-, 2-Morpholino- oder 2-Piperidino-4-chlortriazinyl-6-, 2-Cyclohexylamino-4-chlortriazinyl-2-, 2-Arylamino- und substituiertes Aryl-amino-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxi-4-chlortriazinyl-6-, 2-(o-, m- oder p-Methyl- oder Methoxyphenyl)-oxi-4-chlor-triazinyl-6-, 2-Alkylmercapto- und 2-Arylmercapto- oder 2-(substituiertes Aryl)-mercapto-4-chlortriazinyl-6-,

wie 2-β-Hydroxyethyl-mercapto-4-chlortriazinyl-6, 2-Phenylmercapto-4-chlor-triazinyl-6-, 3-(4'-Methylphenyl)-mercapto-4-chlortriazinyl-6-, 2-Methyl-4-chlor-triazinyl-6-, 2-Phenyl-4-chlor-triazinyl-6-, 2,4-Difluortriazinyl-6, Monofluortriazinylreste, die durch Amino-, Alkylamino-, Aralkylamino-, Arylaminogruppen substituiert sind, wobei Alkyl insbesondere gegebenenfalls substituiertes $C_1$-$C_4$-Alkyl, Aralkyl, insbesondere gegebenenfalls substituiertes Phenyl-$C_1$-$C_4$-Alkyl und Aryl insbesondere gegebenenfalls durch Sulfo-, Alkyl-, insbesondere $C_1$-$C_4$-Alkyl-, Alkoxy-, insbesondere $C_1$-$C_4$-Alkoxy, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-β-Methoxyethylamino-4-fluor-triazinyl-6, 2-β-Hydroxy-ethylamino-4-fluor-triazinyl-6, 2-Di-(β-hydroxyethylamino)-4-fluortriazinyl-6-, 2-β-Sulfoethylamino-4-fluor-triazinyl-6, 2-β-Sulfoethyl-methylamino-4-fluor-triazinyl-6, 2-Carboxymethylamino-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(x-Sulfobenzyl)-amino-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6,

2-(o-, m-, p-Chlorphenyl)-amino-4-fluor-triazinyl-6, 2-(o-, m-, p-Methoxyphenyl-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(2'-Carboxy-4-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, Mono-, Di- oder Trihalogenpyrimidinylreste, wie 2,4-Dichlorpyrimidin-6-, 2,4,5-Trichlorpyrimidinyl-6-, 2,4-Dichlor-5-nitro- oder -5-methyl- oder -5-carboxy-methyl- oder -5-carboxy- oder 5-cyano- oder -5-vinyl- oder -5-sulfo- oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder -carbonyl-, β-(4',5'-Dichlorpyridazon-6'-yl-1')-ethyl-carbonyl-, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- oder N-Ethyl-N-(2,4-dichlortriazinyl-6)-amino-acetyl-, N-Methyl-N-(2,3-dichlorchinoxalin-6-sulfophenyl)-amino-acetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-

6-chlormethyl-4-pyrimidinyl-, 2,6-Difluor-5-chlormethyl-4-pyrimidinyl-,2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-, 6-Fluor-5-chlor-pyrimidinyl-4, 6-Fluor-5-trifluormethyl-pyrimidinyl-4, 6-Fluor-2-methyl-pyrimidinyl-4, 6-Fluor-5-chlor-2-methyl-pyrimidinyl-4, 5,6-Difluor-pyrimidinyl-4, 6-Fluor-5-chlor-2-trifluormethyl-pyrimidinyl-4, 6-Fluor-2-phenyl-pyrimidinyl-4, 6-Fluor-5-cyan-pyrimidinyl-4, 6-Fluor-5-nitro-pyrimidinyl-4, 6-Fluor-6-methyl-sulfonyl-pyrimidinyl-4, 6-Fluor-5-phenylsulfophenyl-pyrimidinyl-4, sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinrin-

gen, wie 2-Carboxymethylsulfonyl-pyrimidinyl-4-, 2-Methylsulfonyl-6-methylpyrimidinyl-4-, 2-Methylsulfonyl-6-ethyl-pyrimidinyl-4-, 2-Phenylsulfonyl-5-chlor-6-methyl-pyrimidinyl-, 2,6-Bis-methylsulfophenyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methyl-sulfonyl-5-chlor-6-chlormethyl-pyrimidin-4-, 2-Methylsulfonyl-4-chlor-6-methylpyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methyl-sulfonyl-6-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methoxysulfonyl-5-chlorpyrimidinyl-4-, 2-Sulfoethylsulfonyl-6-methyl-pyrimidinyl-4-, 2-Methyl-sulfonyl-5-brom-pyrimidinyl-4-, 2-Phenyl-sulfophenyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methyl-sulfonyl)-pyrimidin-4- oder -5-carbonyl-, 2-Ethylsulfonyl-6-chlorpyrimidin-5-carbonyl-, 2,4-Bis-(methylsulfonyl)-

pyrimidin-5-sulfonyl-, 2-Methylsulfonyl-4-chlor-6-methyl-pyrimidin-5-sulfonyl- oder -carbonyl-, ammoniumgruppenhaltige Triazinringe, wie Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-Aminopiperidinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-Sulfophenyl)-aminotriazinyl-6-, ferner 4-Phenylamino- oder -4-(sulfophenylamino)-triazinyl-6-Reste, die in 2-Stellung über eine Stickstoffbindung das 1,4-Bis-azabicyclo-[2,2,2]-octan oder das 1,2-Bis-aza-bicyclo-[0,3,3]-octan quartär gebunden enthalten, 2-Pyridinium-4-phenylamino- oder -4-(o-, m- oder p-Sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino- oder Alkoxy-, wie Methoxy- oder Alkoxy-, oder Aroxy-, wie Phenoxy- oder Sulfophenoxy-Gruppen substituiert sind: 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methyl-sulfonyl- oder 2-Ethylsulfonylbenzthiazol-5- oder 6-sulfonyl- oder -carbonyl-, 2-Phenylsulfonyl-benzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyan-phenyl, 2,4-Difluor-1,3,5-tricyanphenyl, 2,4,5-Trifluor-1,3-dicyan-phenyl, 2,4-Dichlor-5-methylsulfonyl-pyrimidinyl-6, 2,4-Trichlor-5-ethylsulfonyl-pyrimidinyl-6, 2-Fluor-5-methylsulfonyl-6'-(2-sulfophenylamino)-pyrimidinyl-4, 2,5-Dichlor-6-methyl-sulfonyl-pyrimidiyl-4.

Beispiele für aliphatische Reaktivgruppen X sind folgende:

2-Brom-acryloyl, α,β-Dibrom-propionyl, β-Phenylsulfonylpropionyl, β-Methylsulfonyl-propionyl, β-Chlor-β-phenylsulfonyl-propionyl, β-Brom-acryloyl, 2,2,3,3-Tetrafluorcyclobutan-1-carbonyl, β-Chlor-propionyl.

Im Rahmen der Formel (1) sind folgende Farbstoffe bevorzugt:

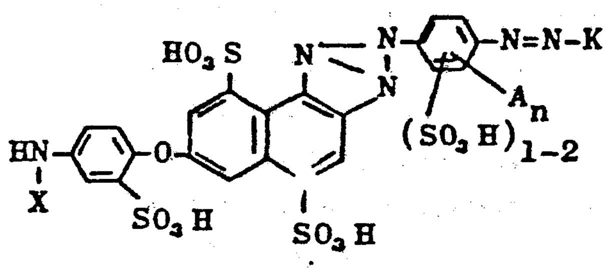 (3)

worin A, K, X und n die bei Formel (1) angegebene Bedeutung haben;

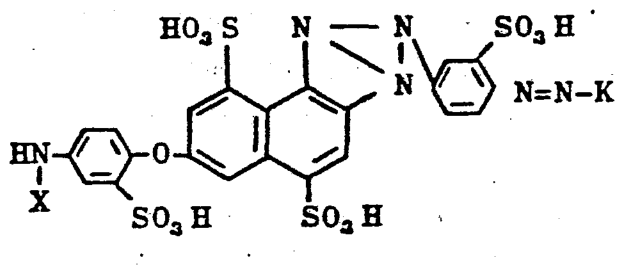 (4)

worin X und K die bei Formel (I) angegebene Bedeutung haben; weiterhin solche der Formel (1), (3) und (4), in denen K für folgende Reste steht:

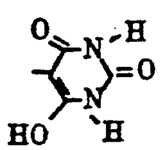

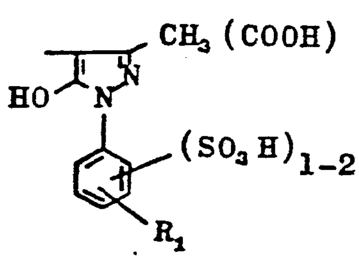 worin $R_1$ = H, Cl, $CH_3$,

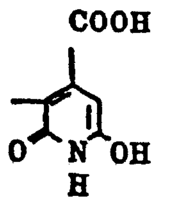

,

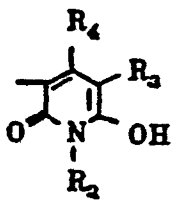

worin $R_4$ = H, $CH_3$, $C_2H_5$, $C_6H_5$,
$R_3$ = H, Cl, $SO_3H$, $CH_2SO_3H$, CN, $CONH_2$,
$R_2$ = H, $CH_3$, $C_2H_5$, $C_2H_5OH$, $C_2H_5OSO_3$;

weiterhin solche der Formel (1), (3) und (4), in denen X für folgende Reste steht:

2,6-Difluor-5-chlor-pyrimidinyl-4,
2-Fluor-5-chlor-pyrimidinyl-4,
2-Fluor-5-chlor-6-methyl-pyrimidinyl-4,
2-Fluor-5,6-dichlor-pyrimidinyl-4,
6-Fluor-2,5-dichlor-pyrimidinyl-4,
2-Fluor-4-amino-triazinyl-6,
2-Fluor-4-methylamino-triazinyl-6,
2-Fluor-4-β-oxyethylamino-triazinyl-6,
2-Fluor-4-diethylamino-triazinyl-6,
2-Fluor-4-N-methylphenylamino-triazinyl-6,
2-Fluor-4-N-ethylphenylamino-triazinyl-6,
2-Fluor-4-(2'-sulfophenylamino)-triazinyl-6,
2-Fluor-4-(3'-sulfophenylamino)-triazinyl-6,
2-Fluor-4-(4'-sulfophenylamino)-triazinyl-6,
2-Fluor-4-(2',5'-disulfophenylamino)-triazinyl-6,
2-Fluor-4-(1',5'-disulfonaphthyl-2'-amino)-triazinyl-6.

Gegenstand der Erfindung sind weiterhin Verfahren zur Herstellung der Farbstoffe der Formel (1). Im einzelnen sind folgende Verfahren zu erwähnen:

1) Verbindungen der Formel

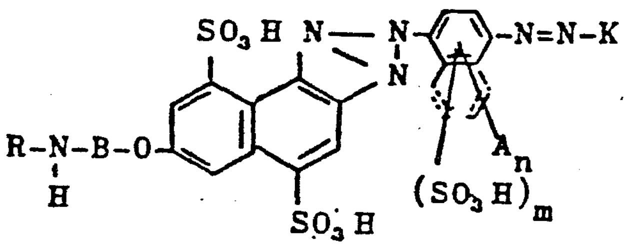

(5)

werden mit einer Reaktivkomponente der Formel

X - Y (6)

worin Y einen als Anion abspaltbaren Substituenten (insbesondere Halogen) bedeutet, unter Abspaltung von HY umgesetzt.

2) Amine der Formel

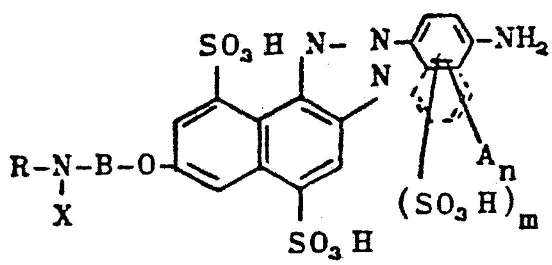

(7)

wurden diazotiert und mit Kupplungskomponenten der Formel (2) unter geeigneten Bedingungen vereinigt.

In den Verbindungen der Formeln (5), (6) und (7) haben R, B, A, K, m und n die oben angegebene Bedeutung. Die Reaktionsbedingungen der Herstellungsvarianten 1) und 2) entsprechen den auf dem Gebiet der Acylierung, Diazotierung und Kupplung üblichen Bedingungen.

Geeignete Reaktivkomponenten der Formel (6) sind beispielsweise solche, die den vorgenannten Reaktivgruppen zugrundeliegen, d.h. im allgemeinen die Halogenide, insbesondere die Chloride der genannten Komponenten X.

Die neuen Farbstoffe der Formel (I) eignen sich zum Färben und Bedrücken von Hydroxyl- oder Amidgruppen enthaltenden Materialien, wie Textilfasern-, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die in den Beispielen genannten Gewichte beziehen sich auf die freie Säure. Die in den Beispielen angegebenen Farbkennzahlen beziehen sich auf Colour Index Hue Indication Chart (Indicator Numbers).

Beispiel 1

a) 319 g (1 mol) 1-Amino-6-oxi-naphthalin-4,8-disulfonsäure werden in 1000 ml Wasser verrührt und auf pH 8,5 gestellt. Man setzt dann 221 g (1 mol) 2-Fluor-5-nitrobenzolsulfonsäure-1 zu und erwärmt auf 80-85°C. Dabei hält man den pH im Bereich von 8,3-8,7 durch Zutropfen von konz. Natronlauge. Vom Ende der Reaktion überzeugt man sich durch ein Dünnschichtchromatogramm (Kieselgel; 600 ml Methylethylketon, 120 ml 5 n-Ammoniak, 120 ml Diethylamin, 75 ml Dimethylformamid).

Falls noch Ausgangsmaterial vorhanden ist, muß Fluornitrobenzolsulfonsäure nachgesetzt werden. Zur Isolierung wird die Lösung mit konz. Salzsäure auf pH 1 gestellt und mit 20 Volumen % Kochsalz versetzt. Nach dem Abkühlen auf Raumtemperatur wird abgesaugt. Zur Reinigung kann aus wenig Wasser umkristallisiert werden. Die feuchte Paste wird in dieser Form weiterverarbeitet. Das Zwischenprodukt entspricht in Form der freien Säure der Formel

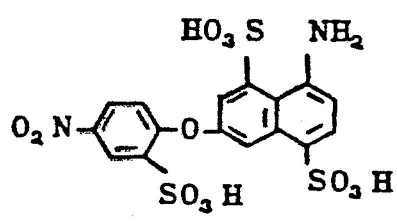

b) 26,0 g (0,1 mol) 1-Amino-4-oxalylamino-benzolsulfonsäure-3 werden in wäßriger Lösung bei pH 7 mit 6,9 g

Natriumnitrit versetzt und in üblicher Weise indirekt diazotiert, in dem man die Lösung in eine Vorlage aus 200 ml Eiswasser und 28 ml konz. Salzsäure einfließen läßt. Die fertige Diazotierung versetzt man mit einer wäßrigen Suspension von 0,1 mol 1-Amino-6-(4'-nitro-2'-sulfophenyl)-naphthalin-4,8-disulfonsäure und stumpft dann mit 20 %iger Natriumacetatlösung bei pH 4 ab. Nach beendeter Kupplung neutralisiert man mit Natronlauge, versetzt mit 90 ml konz. Ammmoniak und erhitzt auf 80-90° C. Dann streut man zur Triazolierung 56 g (0,22 mol) Kupfersulfat ein und hält die Temperatur bis zur Entfärbung der Lösung. Das Triazol wird durch Zugabe von 25 Volumen % Natriumchlorid und 5 Volumen % Kaliumchlorid ausgesalzen.

Die Paste wird bei 90-95° C in ein gut gerührtes Gemisch aus 500 ml Wasser, 10 ml Essigsäure und 70 g Eisenspäne eingetragen. Man rührt solange bis das Dünnschichtchromatogramm das Ende der Reaktion anzeigt. Durch Einstreuen von Soda wird der pH auf 7 gebracht und vom Eisenschlamm abgeklärt. Dann wird soviel konz. Natronlauge zugesetzt, daß eine 1n-Lauge entsteht und zur quantitativen Abspaltung des Oxalylrestes und Ausfällung von Kupferoxid 1 Stunde gekocht. Man filtriert heiß, kühlt auf Raumtemperatur ab und stellt auf pH 1, wobei das Triazol ausfällt, das nach mehrstündigem Stehen abfiltriert wird. Die Paste wird in dieser Form weiterverarbeitet. Das Produkt entspricht in Form der freien Säure der Formel

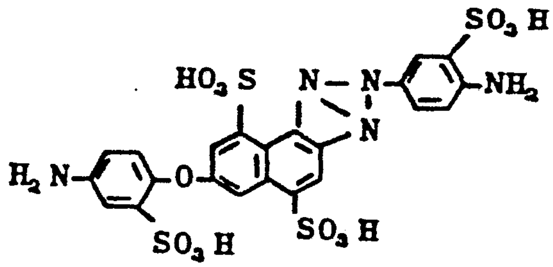

c) 0,1 mol des Triazols, das wie vorstehend beschrieben erhalten wird, wird in 500 ml Wasser neutral gelöst und auf 5°C abgekühlt. Man tropft dann in 30 Minuten 16,9 g (0,1 mol) 2,4,6-Trifluor-5-chlorpyrimidin ein und hält den pH durch gleichzeitige Zugabe von 15 % iger Sodalösung im Bereich von 6-6,5. Das Kondensationsprodukt bleibt in Lösung und kann in dieser Form für die nachfolgende indirekte Diazotierung verwendet werden. Das Produkt entspricht in Form der freien Säure der Formel

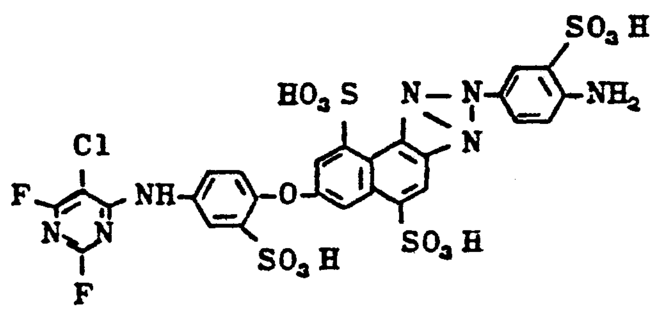

d) Die nach c) erhaltene Lösung versetzt man bei pH 7 mit 7 g Natriumnitrit und läßt sie in eine Vorlage aus 28 ml konz. Salzsäure und 500 ml Eiswasser einlaufen. Man rührt 1 Stunde nach und entfernt den geringen Überschuß an Nitrit mit Amidosulfonsäure.

In die Suspension der Diazotierung läßt man die Kupplungskomponente einlaufen, die man wie folgt erhält:

0190615

12,8 g (0,1 mol) Barbitursäure werden in 300 ml Wasser mit 0,1 mol konz. Natronlauge zunächst gelöst und dann mit Essigsäure bei pH 5-6 wieder ausgefällt. Man puffert mit Natriumacetat auf pH 5 ab. Nach beendeter Kupplung wird der teilweise ausgefallene Farbstoff mit Kochsalz quantitativ abgeschieden, filtriert, bei 70-90°C im Vakuumtrockenschrank getrocknet und gemahlen. Man erhält ein gelbes Farbstoffpulver, der sich leicht in Wasser mit gelber Farbe löst. Der Farbstoff entspricht der Formel

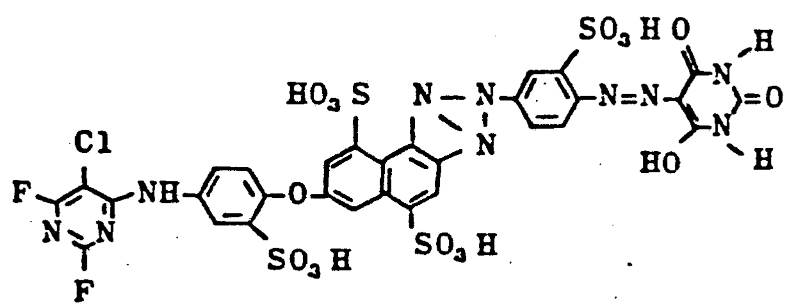

Nach einem der für Reaktivfarbstoffe üblichen Applikationsverfahren erhält man damit auf Baumwolle ein brillantes grünstichiges Gelb (Farbkennzahl (1)) von hoher Farbstärke.

Beispiel 2

19 g (0,11 mol) 2-Aminobenzolsulfonsäure werden in 1 l Eiswasser gelöst und mit 15 g (0,11 mol) Trifluortriazin tropfenweise unter gutem Rühren versetzt, wobei man durch gleichzeitige Zugabe von verdünnter Sodalösung den pH zwischen 5,5 und 6,5 hält. Nach beendeter Kondensation gibt man eine neutrale Lösung von 0,1 mol des Triazols zu, das nach den Angaben des Beispiels 1, Abschnitt b erhältlich ist. Die Acylierung des Triazols wird bei 0-5°C und pH 5,5-6,5 ausgeführt. Die gelöste Diazokomponente der Formel

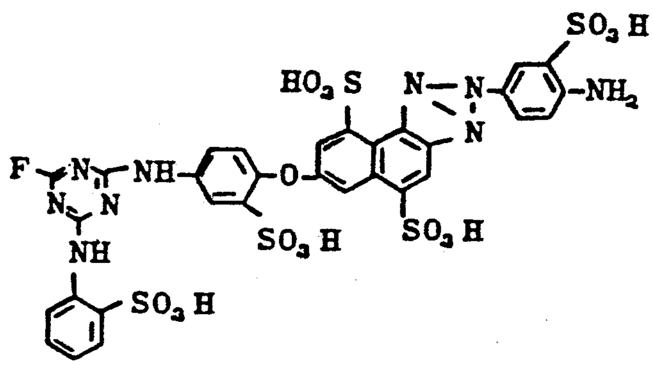

wird nach den Angaben des Beispiels 1, Abschnitt d indirekt diazotiert und mit Barbitursäure gekuppelt. Nach Aufarbeitung erhält man ein gelbes Farbstoffpulver, das sich leicht in Wasser mit gelber Farbe löst und Baumwolle in brillanten grünstichig gelben Tönen färbt (Farbkennzahl 1).

Beispiel 3

17,3 g (0,1 mol) 3-Aminobenzolsulfonsäure werden in 500 ml Eiswasser mit 20,3 g (0,11 mol) Cyanurchlorid versetzt. Man rührt solange bei 0-3°C bis keine Aminogruppe mehr nachweisbar ist. Anschließend verdünnt man mit soviel Wasser, daß gerade eine Lösung entsteht und klärt das nicht umgesetzte Cyanurchlorid ab. Dann neutralisiert man und gibt eine neutrale Lösung von 0,1 mol des Triazols zu, das man nach den Angaben von Beispiel 1, Abschnitt b erhält. Die Acylierung des Triazols wird bei 25-30°C und pH 5,5-6,5 ausgeführt. Das gelöste Triazol der Formel

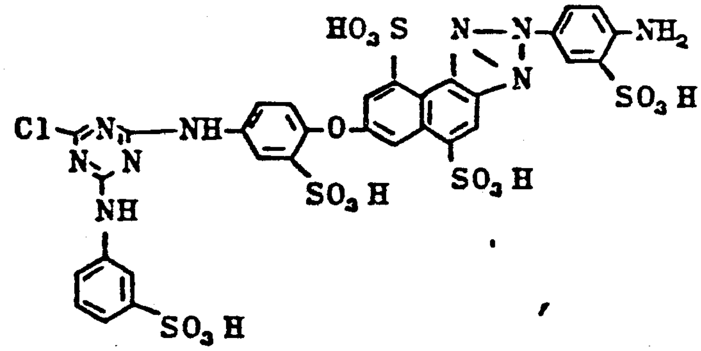

wird nach den Angaben des Beispiels 1, Abschnitt d) indirekt diazotiert und mit Barbitursäure gekuppelt. Der resultierende Farbstoff färbt Baumwolle gleichfalls in brillanten grünstichig gelben Tönen (Farbkennzahl 1).

Weitere wertvolle Farbstoffe erhält man nach den Angaben von Beispiel 1, wenn man als Kupplungskomponenten die in Spalte 1 und als Reaktivkomponente die in Spalte 2 genannten Verbindungen verwendet, wobei man für diee Herstellung der Difluor- bzw. Dichlor-amino-triazine sinngemäß nach den Angaben von Beispiel 2 bzw. 3 verfährt.

| Beispiel | Kupplungskomponente | Reaktionskomponente | Farbton | Farbkennzahl |
|---|---|---|---|---|
| 4 | Barbitursäure | 2,4-Difluor-5,6-dichlor-pyrimidin | grünstichig gelb | 1 |
| 5 | " | 4,6-Difluor-2,5-dichlor-pyrimidin | " | 1 |
| 6 | " | 2,4-Difluor-5-chlor-6-methyl-pyrimidin | " | 1 |
| 7 | " | 2,4-Difluor-6-(3'-sulfophenylamino)-triazin | " | 1 |
| 8 | " | 2,4-Difluor-6-(2'-methyl-4'-sulfophenylamino)-triazin | " | 1 |
| 9 | " | 2,4-Difluor-6(2'-chlor-5'-sulfophenylamino)-triazin | " | 1 |
| 10 | " | 2,4-Difluor-6-amino-triazin | " | 1 |
| 11 | " | 4,6-Difluor-5-chlor-2-methyl-pyrimidin | " | 1 |
| 12 | " | 2,4-Dichlor-(2',5'-disulfo-phenylamino)-triazin | " | 1 |
| 13 | " | 2,4-Dichlor-(2',4'-disulfo-phenylamino)-triazin | " | 1 |
| 14 | " | 2,4-Dichlor-6-amino-triazin | " | 1 |

| Beispiel | Kupplungskomponente | Reaktivkomponente | Farbton | Farbkennzahl |
|---|---|---|---|---|
| 15 | 1,4-Dimethyl-3-carbamoyl-6-hydroxy-pyridon-2 | 2,4,6-Trifluor-5-chlor-pyrimidon | gelb | 2 |
| 16 | 1-Ethyl-3-carbamoyl-4-methyl-6-hydroxy-pyridon-2 | " | " | 2 |
| 17 | 4-Carboxy-6-hydroxy-pyridon-2 | " | " | 2 |
| 18 | 1-Ethyl-2-carbamoyl-4-methyl-6-hydroxy-pyridon-2 | 2,4-Difluor-(2'-sulfo-phenylamino)-triazin | " | 2 |
| 19 | 1-(2'-Chlor-5'-sulfo-phenyl)-3-methyl-pyrazolon-5 | 2,4,6-Trifluor-5-chlor-pyrimidin | " | 2 |
| 20 | 1-(4'-Sulfo-phenyl)-3-carboxy-pyrazolon-5 | " | goldgelb | 3 |
| 21 | " | 2,4-Difluor-6-(2'-sulfo-phenyl-amino)-triazin | " | 3 |
| 22 | " | 2,4-Difluor-6-amino-triazin | " | 3 |

| Beispiel | Kupplungskomponente | Reaktivkomponente | Farbton | Farbkennzahl |
|---|---|---|---|---|
| 23 | 1-Hydroxy-naphthalin-3,6-disulfonsäure | 2,4-Difluor-6-amino-triazin | scharlach | 7 |
| 24 | 1-Hdroxy-naphthalin-4,6-disulfonsäure | " | " | 7 |
| 25 | 1-Hydroxy-8-benzoyl-amino-naphthalin-3,6-disulfonsäure | " | blaustichiges rot | 9 |

Beispiel 26

0,1 mol des Farbstoffs der Formel

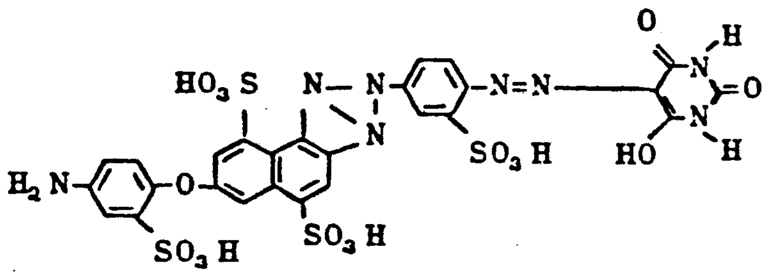

werden in 1 l Wasser gelöst. Bei pH 6-7 und 5-10°C tropft man 16,5 g 2,4,6-Trifluor-5-chlor-pyrimidin. Das Produkt fällt bei der Acylierung zum Teil aus. Nach beendeter Kondensation wird der Farbstoff nach den Angaben von Beispiel 1, Abschnitt d aufgearbeitet. Er ist identisch mit den nach Beispiel 1 erhaltenen.

Beispiel 27

Wenn man in Beispiel 1 die 1-Amino-4-oxalylamino-benzolsulfonsäure-3 durch eine äquimolare Menge der nachfolgend genannten Verbindungen ersetzt und sinngemäß nach den in Abschnitt a und b des Beispiels 1 genannten Reaktionsbedingungen verfährt, so erhält man gleichfalls Triazole, die nach Angaben von Abschnitt c und d des Beispiels 1 in wertvolle Farbstoffe überführt werden können.

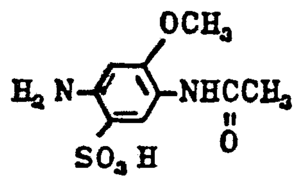

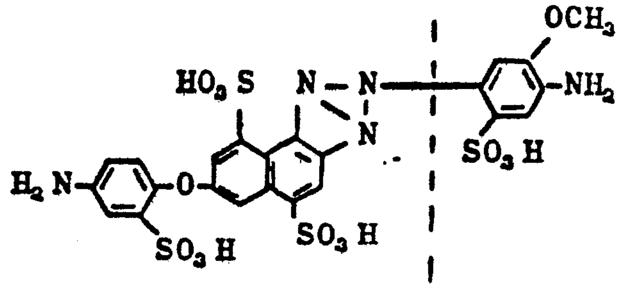

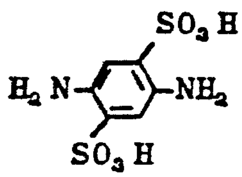

"

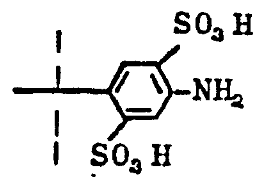

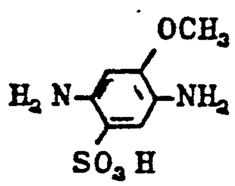

"

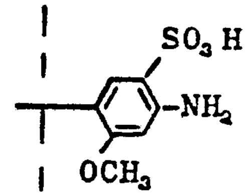

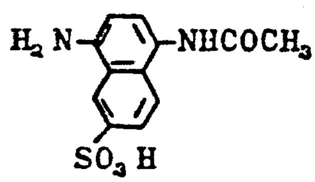

"

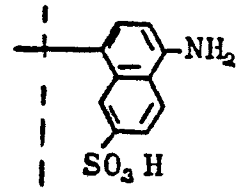

**Beispiel 28**

0,1 mol des Farbstoffs der Formel

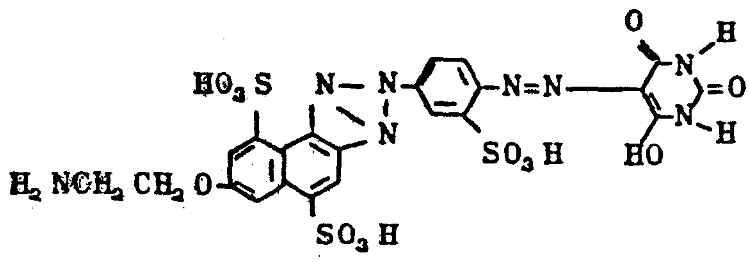

werden in 1 l Wasser verrührt. Bei 15-18°C tropft man 16,5 g 2,4,6-Trifluor-5-chlor-pyrimidin ein und hält durch gleichzeitige Zugabe von verdünnter Natronlauge den pH im Bereich von 8,5-9. Nach beendeter Kondensation wird der Farbstoff ausgesalzen, bei 70-90°C im Vakuumtrockenschrank getrocknet und gemahlen. Man erhält ein gelbes Farbstoffpulver, das Baumwolle in klaren grünstichig gelben Tönen färbt (Farbkennzahl 1). Der Farbstoff entspricht der Formel

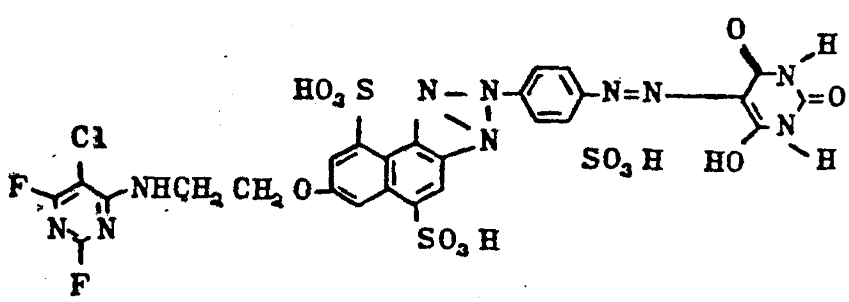

Patentansprüche

1. Azotriazolylfarbstoffe, die in Form der freien Säure der Formel

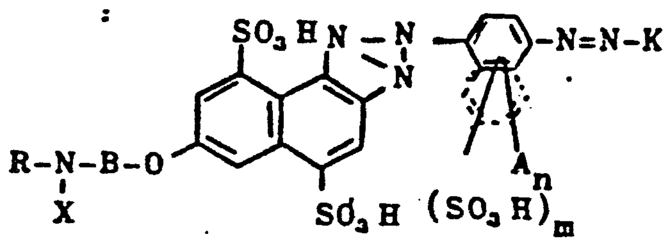

entsprechen, worin

K = Rest einer Kupplungskomponente,
A = Substituent,
B = Brückenglied,
X = Rest einer Reaktivkomponente,
m = 0, 1 oder 2,
n = 0 oder 1,
R = H, gegebenenfalls substituiertes Alkyl.

2. Farbstoffe des Anspruchs 1 der Formel

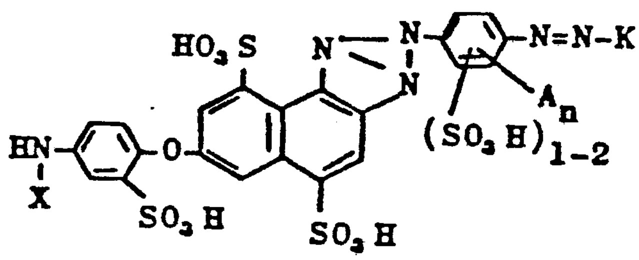

worin A, K, X und n die in Anspruch 1 angegebene Bedeutung haben.

3. Farbstoffe des Anspruchs 1 der Formel

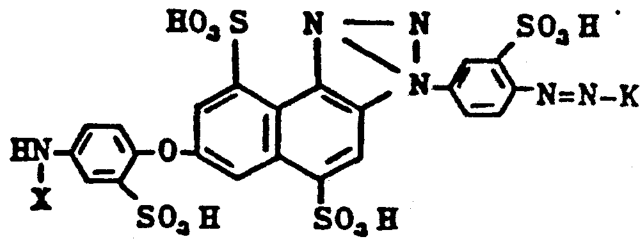

worin X und K die in Anspruch 1 angegebene Bedeutung haben.

4. Farbstoff der Ansprüche 1-3, worin K = Rest einer Kupplungskomponente der Aminobenzol-, Aminonaphthalin-, Hydroxynaphthalin-, Aminohydroxynaphthalin-, Pyrazolon-, Pyrimidon-, Acetessigsäurearylid- oder Aminopyrazolreihe.

5. Farbstoffe der Ansprüche 1-4, worin K =

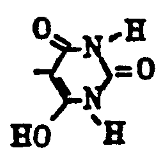

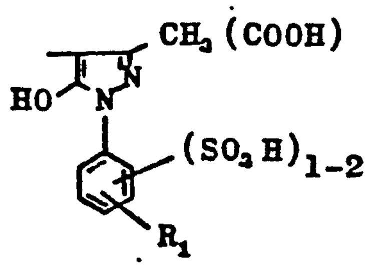

worin $R_1$ = H, Cl, $CH_3$,

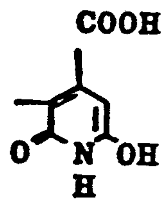

oder

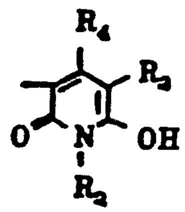

worin $R_4$ = H, $CH_3$, $C_2H_5$, $C_6H_5$,
$R_3$ = H, Cl, $SO_3H$,
$CH_2SO_3H$, CN, $CONH_2$,
$R_2$ = H; $CH_3$, $C_2H_5$,
$C_2H_5OH$, $C_2H_5OSO_3H$.